# EUROPEAN PATENT SPECIFICATION

(11) **EP 0 558 783 B1**
(45) Date of publication and mention of the grant of the patent: **26.07.1995**
(21) Application number: 92103810.5
(22) Date of filing: 06.03.1992
(51) Int. Cl.: A21C 9/06, A21C 9/00

(54) **Folding plastic material**
Falter von plastischem Material
Pliage d'une matière plastique

(43) Date of publication of application: 08.09.1993
(73) Proprietor: FRISCO-FINDUS AG, CH-9400 Rorschach (CH)
(72) Inventor: Larsen, Hans Kurt, S-265 00 Aestorp (SE)

(56) References cited:
- FR-A- 2 372 598
- GB-A- 469 454
- GB-A- 1 290 704
- GB-A- 2 243 281
- US-A- 3 865 963

## Description

The present invention relates to an apparatus and process for the folding of sheets of plastic material such as dough sheets.

The automatic folding of sheeted dough for stuffed bakery products is normally carried out on a continuous conveyor by the use of a type of plough equipment and this method works well for small products such as pirogues. The plough shaped apparatus is mounted above a conveyor belt carrying the dough products and when a product passes beneath the plough, one half of its surface will be lifted and turned over to cover the other half. This principle is suitable if the dough product has a certain thickness and not too large a surface to fold. However, dough products with little self stability such as large sheets of dough having a width of above about 18 cm and a thickness of only about 1 mm, e.g. sheets of dough used for the preparation of Calzone pizzas, the plough method is not satisfactory, and for certain types of dough it does not work at all. For instance, the half of the surface of the dough that is being lifted and turned collapses before it has covered the other half of the dough.

USA-3 865 963 discloses an apparatus for folding a dough sheet comprising two successive conveyors, the second conveyor carrying a forward portion of the dough swinging about an axis to fold the forward portion of the dough over the rearward portion of the dough and then reverting to its original position whereupon the folded dough is transported from the first conveyor to the second conveyor and then to further conveyors.

The methods so far proposed for folding dough sheets having a width above 18 cm involve complicated machinery and the folding precision is easily disturbed by small variations of the dough consistency.

We have now devised a machine for the automatic folding of sheets of plastic material such as dough sheets, which may be thin and have a large area.

Accordingly, the present invention provides an apparatus for folding a sheet of plastic material which comprises first and second successive conveyors for transporting the sheet of plastic material, the first conveyor adapted to travel continuously and the second conveyor adapted to rotate about a transverse axis from a position in longitudinal end-to-end relationship with the downstream end of the first conveyor to a substantially inverted position above and separated from the first conveyor to cause the leading part of the plastic material on the second conveyor to be folded onto the rear part of the plastic material on the first conveyor and to enable the folded plastic material to travel to the downstream end of the first conveyor beneath the second conveyor.

The first conveyor is conveniently a retracting conveyor with an endless belt adapted to travel continuously, which is advantageously trained around a shuttle board capable of reciprocating.

The second conveyor may be a flap conveyor with an endless belt adapted to travel only when the second conveyor is in longitudinal end-to-end relationship with the downstream end of the first conveyor which, at this time, is in a retracted position.

Conveniently the second conveyor is pivotally attached at its upstream end to the downstream end of the first conveyor by a hinge, preferably an eccentric hinge on each lateral side of the first conveyor. The first conveyor may be provided with a means e.g. a cam or pneumatic cylinder, which on movement of the first conveyor to its forward position activates the hinge which in turn forces the second conveyor to rotate around the hinge to the substantially inverted position preferably at an angle from 160° to 180°.

For the automatic folding of a plurality of sheets of plastic material transported consecutively along the conveyors, the second conveyor is conveniently adapted to reciprocate from its inverted position above the first conveyor back to its position in longitudinal end-to-end relationship with the downstream end of the first conveyor, after a folded plastic material has been discharged from the downstream end of the first conveyor.

Advantageously a sensor means is provided to detect the leading edge of the sheet of plastic material as it is transported on the second conveyor, the sensor means being positioned above the second conveyor and preferably at the upstream end relative to the second conveyor positioned in longitudinal end-to-end relationship with the downstream end of the first conveyor the said sensor means being adapted to activate a means for rotating the second conveyor about a transverse axis to a substantially inverted position above the first conveyor to fold the leading part of the plastic material over so that it comes to lie on the rear part of the plastic material lying on the first conveyor. The sensor means may conveniently be a photocell.

The present invention also provides a process for folding a sheet of plastic material which comprises advancing a sheet of plastic material along a first conveyor adapted to travel continuously and a second conveyor in longitudinal end-to-end relationship with the downstream end of the first conveyor and then rotating the second conveyor about a transverse axis to a substantially inverted position above and separated from the first conveyor so that the leading part of the plastic material on the second conveyor is folded over and comes to lie upon the rear part of the plastic material on the first conveyor and advancing the folded plastic material to the downstream end of the first conveyor beneath the second conveyor.

The folded plastic material may afterwards be transferred from the downstream end of the first conveyor onto an outfeed conveyor or directly into a package on a conveyor positioned below.

The sheet of plastic material may be, for instance, a dough based product suitable for preparing a pizza, preferably having a diameter or width of from 18 to 30 cm and a thickness of from 0.5 to 2 mm. Advantageously a filling is fed onto the rear part of the dough based product and preferably the filling covers a substantial area of the rear half of the dough based product.

Advantageously, several apparatuses of the present invention may be arranged in parallel lanes on a production line. Alternatively, the apparatus of the present invention may comprise first and second conveyors of sufficient width to transport a plurality of sheets side by side e.g. 2 or 3 sheets of plastic material.

The present invention will now be further illustrated by way of example only with reference to the accompanying drawings in which

### Figure 1

represents a diagrammatic sectional side view of an apparatus for folding a dough based product,

### Figure 2

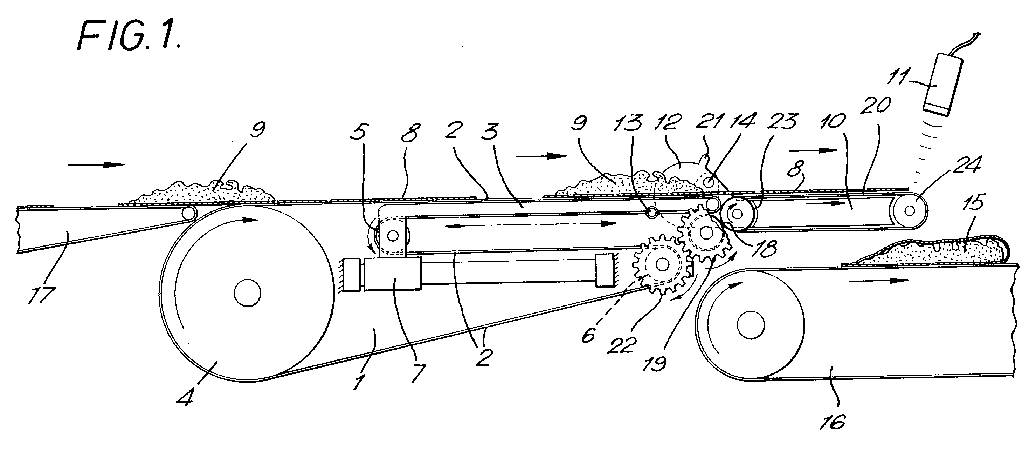

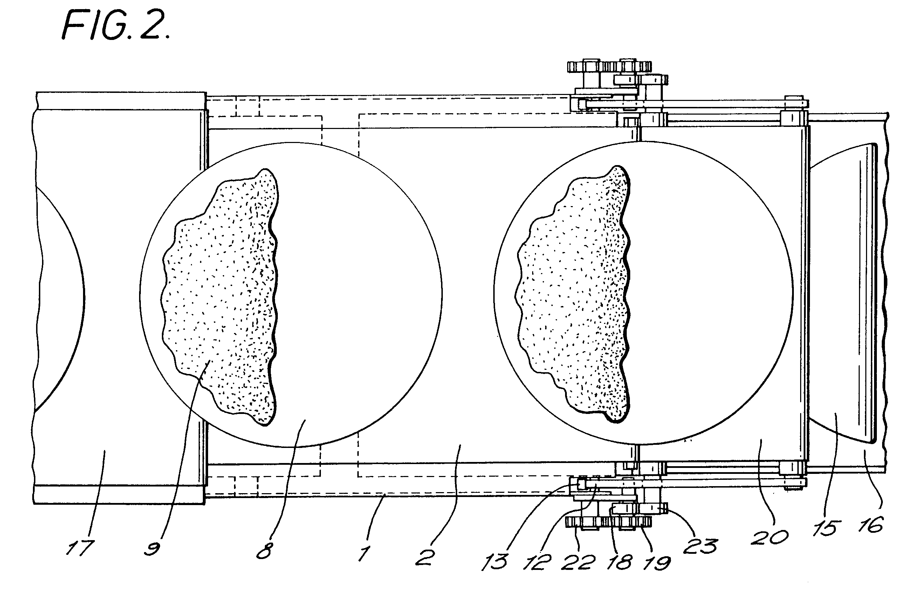

represents a diagrammatic top plan view of the apparatus of Figure 1,

### Figure 3

is an enlarged view of a part of Figure 1 and

### Figure 4 to 10

are diagrammatic sectional side plan views representing the successive phases of the operation of the apparatus.

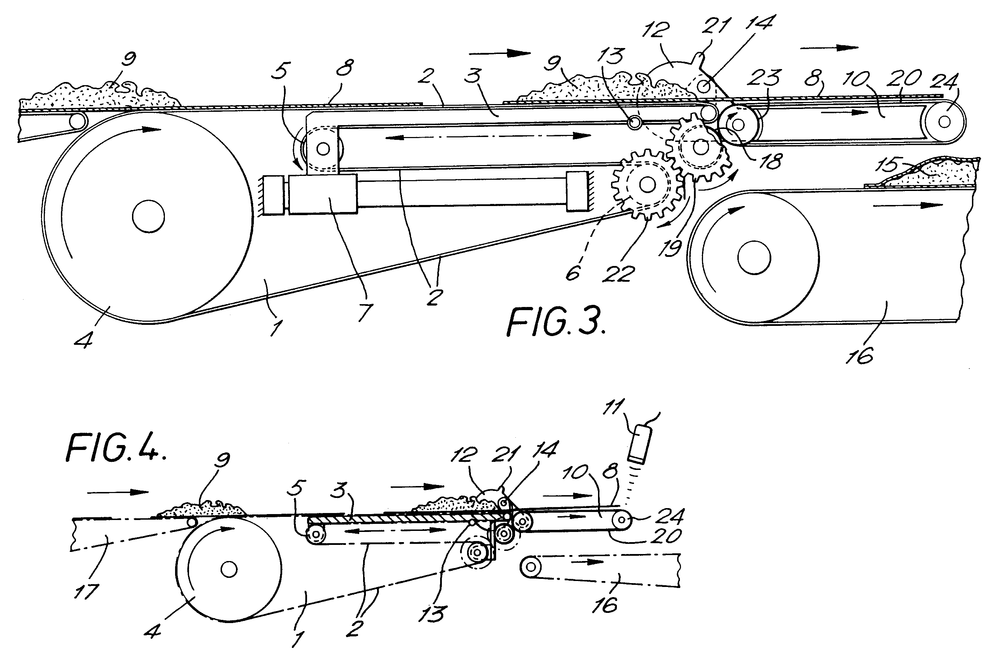

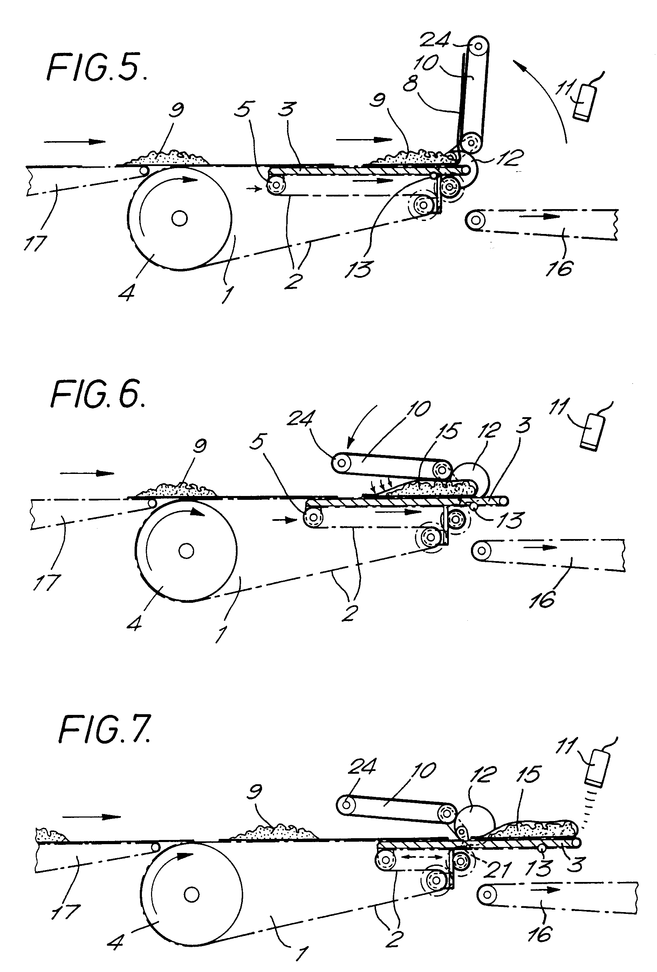

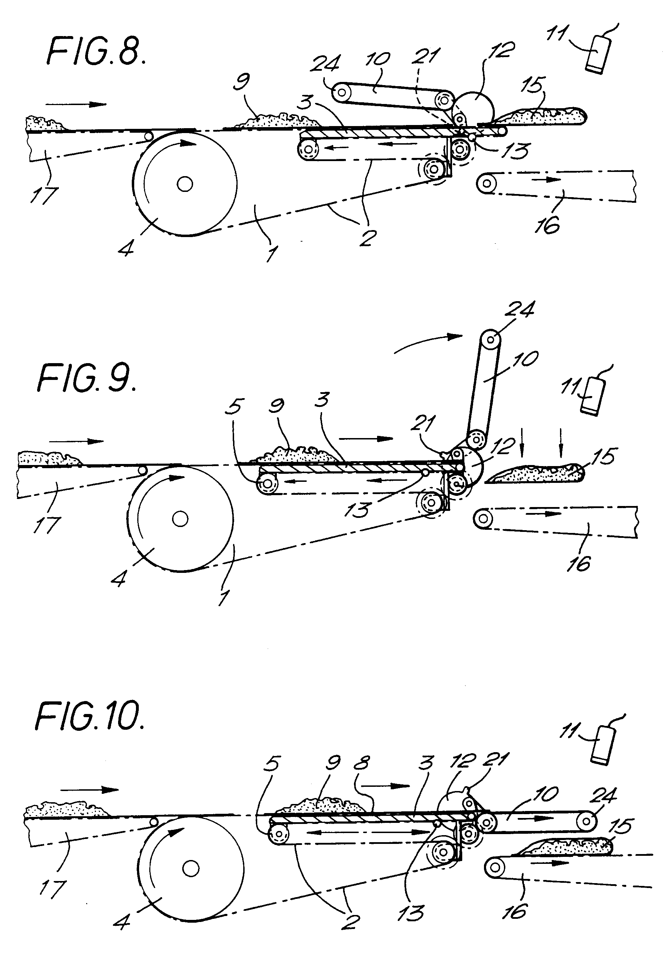

Referring to the drawings, a retracting conveyor (1) comprises a retracting belt (2) trained around a driving roller (4), rollers (5) and (6) and a reciprocating shuttle board (3). A flap conveyor (10) comprises an endless belt (20) trained around rollers 23 and 24 at the front edge of which is a photocell (11). The shuttle board (3) is fixed to a driving unit comprising one or two horizontally located pneumatic cylinders (7) to reciprocate the shuttle board (3). The roller (5) is fixed to the shuttle board (3) and will be reciprocated with it. The roller (6) is fixed to the frame of the retracting conveyor (1) and in each end provided with a gear wheel (22) to drive a roller (18) by a gear wheel (19). Rollers (18) and (23) are friction coated and in contact when the flap conveyor (10) is in its lower position as shown in Figures 1, 3 and 4 whereby the conveyor belt (20) will be driven. When the flap conveyor (10) is turned to an inverted position above the retracting belt (2) as shown in Figures 5 to 9, the conveyor belt (20) will not be driven as roller (18) and (23) are not in contact.

The flap conveyor (10) is, on each side of the retracting conveyor (1), pivoted in an eccentric hinge (12) having a pivotal point (14). Projecting from each side of the shuttle board (3) a cam roller (13) is located.

In operation, the dough based pieces (8) having a diameter of 27.5 cm and a thickness of 1 mm covered on the rear half of their surfaces with filling (9), are transported along an infeed conveyor (17) on to the retracting belt (2) in the direction of the arrows and on to the flap conveyor (10).

When the non-covered half of the surface (8) has reached the front edge of the flap conveyor belt (20) below the photocell (11), the photocell (11) will give a signal to a solenoid valve (not shown) which activates the cylinder (7) to move the shuttle board (3) to its forward position.

When the shuttle board (3) moves forward, the cam roller (13) will press on the eccentric hinge (12) and force the flap conveyor (10) to turn around its pivoted point (14) and thereby lift and turn the half of the dough piece (8), which is not covered with filling, to an inverted position above the other half to make a folded product (15).

The shuttle board (3) has now reached its forward position and the folded product (15) is transported along the retracting belt (2) to a position below the photocell (11) which will give a signal via the solenoid valve to activate cylinder (7) to retract the shuttle board (3) whereby the folded product (15) will be dropped onto an outfeed conveyor (16) which is located below the flap conveyor.

When the shuttle board (3) retracts, the cam roller (13) will press on the cam (21) of the eccentric hinge (12) and force the flap conveyor (10) to turn back to its lower position.

A time delay relay is set to avoid the photocell (11) being activated by the flap conveyor (10) as it passes below the photocell while turning to its raised and lower positions.

To further illustrate the different phases of the apparatus according to the invention, reference will now be made to Figures 4 to 10.

### Figure 4 (phase 1)

The shuttle board (3) is in its rear position and the retracting belt (2) is retracted. The flap conveyor (10) is in its lower position. The dough piece (8) has reached a position below the photocell (11) which gives a signal to activate the cylinder to move the shuttle board (3) forward.

### Figure 5 (phase 2)

The shuttle board (3) begins to move forward and cam roller (13) presses the flap conveyor (10) to turn over by the eccentric hinge (12).

### Figure 6 (phase 3)

The dough piece (8) has been folded.

### Figure 7 (phase 4)

The shuttle board (3) is in its front position and the folded product (15) has reached a position below the photocell (11) which gives a signal to activate the cylinder (7) to retract the shuttle board (3) and the retracting belt (2).

### Figure 8 (phase 5)

Retraction of the shuttle board 3 is taking place. The cam roller (13) is in contact with the cam (21) of the hinge (12).

### Figure 9 (phase 6)

The shuttle board (3) is in its retracted position. The folded product (15) is dropped and the cam roller (13) has forced the flap conveyor (10) to turn to its lower position.

### Figure 10 (phase 7)

The folded product (15) has fallen down on the outfeed conveyor (16) and a new dough piece (8) is transported forward on the retracting belt (2).

## Claims

1. An apparatus for folding a sheet of plastic material (8) which comprises first and second successive conveyors (1, 10) for transporting the sheet of plastic material, the first conveyor (1) adapted to travel continuously and characterised in that the second conveyor (10, 15) adapted to rotate about a transverse axis from a position in longitudinal end-to-end relationship with the downstream end of the first conveyor to a substantially inverted position above and separated from the first conveyor to cause the leading part of the plastic material (8) on the second conveyor (10) to be folded onto the rear part of the plastic material (8) on the first conveyor (1) and to enable the folded plastic material (15) to travel to the downstream end of the first conveyor beneath the second conveyor.

2. An apparatus according to claim 1 wherein the first conveyor (1) is a retracting conveyor with an endless belt (2) adapted to travel continuously.

3. An apparatus according to claim 2 wherein the endless belt (2) is trained around a shuttle board (3) capable or reciprocating.

4. An apparatus according to claim 1 wherein the second conveyor (10) is a flap conveyor with an endless belt (20) adapted to travel only when the second conveyor is in longitudinal end-to-end relationship with the downstream end of the first conveyor which, at this time, is in a retracted position.

5. An apparatus according to claim 1 wherein the second conveyor (10) is pivotally attached at its upstream end to the downstream end of the first conveyor (1) by an eccentric hinge (12).

6. An apparatus according to claim 5 wherein the first conveyor (1) is provided with a means (7, 13) which, on movement of the first conveyor to its forward position, activates the hinge (12) which in turn forces the second conveyor to rotate around the hinge to the substantially inverted position.

7. An apparatus according to claim 6 wherein the means is a cam (13) or a pneumatic cylinder (7).

8. An apparatus according to claim 1 wherein a sensor means (11) is provided at a position above the second conveyor (10) to detect the leading edge of the plastic material (8) and to activate a means (7, 12, 13) for rotating the second conveyor about a transverse axis in order to fold the plastic material.

9. An apparatus according to claim 8 wherein the sensor means (11) is positioned at the upstream end of the second conveyor.

10. A process for folding a sheet of plastic material (8) which comprises advancing a sheet of plastic material along a first conveyor (1) adapted to travel continuously and a second conveyor (10) in longitudinal end-to-end relationship with the downstream end of the first conveyor and then rotating the second conveyor (10) about a transverse axis to a substantially inverted position above and separated from the first conveyor (1) so that the leading part of the plastic material (8) on the second conveyor (10) is folded over and comes to lie upon the rear part of the plastic material (8) on the first conveyor (1) and advancing the folded plastic material (15) to the downstream end of the first conveyor (1) beneath the second conveyor (10).

## Patentansprüche

1. Vorrichtung zum Falten eines Fladens aus plastischem Material (8), mit einem ersten Förderer (1) und einem zweiten Förderer (10), die hintereinander angeordnet sind und zum Transportieren des Fladens aus plastischem Material dienen, wobei der erste Förderer (1) so ausgebildet ist, daß er kontinuierlich betrieben werden kann,
dadurch gekennzeichnet,
daß der zweite Förderer (10) so ausgebildet ist, daß er aus einer Stellung, in der er in Längsrichtung auf den ersten Förderer ausgerichtet ist und an dessen vorderes Ende angrenzt, um eine Querachse in eine Stellung, in der er sich über dem ersten Förderer befindet und von diesem getrennt ist und in der seine Oberseite im wesentlichen nach unten weist, gedreht werden kann, um zu bewirken, daß der sich auf dem zweiten Förderer (10) befindende vordere Teil des plastischen Materials (8) auf den auf dem ersten Förderer (1) liegenden hinteren Teil des plastischen Materials (8) geklappt wird, und zu ermöglichen, daß das gefaltete plastische Material (15) unter dem zweiten Förderer hinweg zum vorderen Ende des ersten Förderers transportiert wird.

2. Vorrichtung nach Anspruch 1, bei der der erste Förderer (1) ein einziehbarer Förderer mit einem Endlosband (2) ist, der so ausgebildet ist, daß er kontinuierlich laufen kann.

3. Vorrichtung nach Anspruch 2, bei der das Endlosband (2) um eine hin- und herbewegbare Reversierplatte (3) herumgeführt ist.

4. Vorrichtung nach Anspruch 1, bei der der zweite Förderer (10) ein Klappförderer mit einem Endlosband (20) ist, der so ausgebildet ist, daß er nur dann läuft, wenn er in Längsrichtung auf den ersten Förderer ausgerichtet ist und an dessen vorderes Ende angrenzt, wobei sich der erste Förderer in Einziehstellung befindet.

5. Vorrichtung nach Anspruch 1, bei der der zweite Förderer (10) an seinem hinteren Ende mittels einer exzentrischen Drehbefestigung (12) am vorderen Ende des ersten Förderers (1) schwenkbar angebracht ist.

6. Vorrichtung nach Anspruch 5, bei der der erste Förderer (1) mit einem Mittel (7, 13) versehen ist, das beim Bewegen des ersten Förderers in die vordere Stellung die Drehbefestigung (12) betätigt, die wiederum den zweiten Förderer dazu zwingt, sich um die Drehbefestigung in die Stellung zu drehen, in der seine Oberseite im wesentlichen nach unten weist.

7. Vorrichtung nach Anspruch 6, bei der das Mittel eine Kurvenrolle (13) oder ein pneumatischer Zylinder (7) ist.

8. Vorrichtung nach Anspruch 1, bei der an einer Stelle über dem zweiten Förderer (10) ein Sensormittel (11) vorgesehen ist, das den vorderen Rand des plastischen Materials (8) erfaßt und ein Mittel (7, 12, 13) zum Drehen des zweiten Förderers um eine Querachse betätigt, um das plastische Material zu falten.

9. Vorrichtung nach Anspruch 8, bei der das Sensormittel (11) am hinteren Ende des zweiten Förderers angeordnet ist.

10. Verfahren zum Falten eines Fladens aus plastischem Material (8), umfassend das Vorwärtsbewegen eines Fladens aus plastischem Material auf einem ersten Förderer (1), der so ausgebildet ist, daß er kontinuierlich betrieben werden kann, und auf einem zweiten Förderer (10), der in Längsrichtung auf den ersten Förderer ausgerichtet ist und an dessen vorderes Ende angrenzt, das anschließende Drehen des zweiten Förderers (10) um eine Querachse in eine Stellung, in der er sich über dem ersten Förderer (1) befindet und von diesem getrennt ist und in der seine Oberseite im wesentlichen nach unten weist, so daß der sich auf dem zweiten Förderer (10) befindende vordere Teil des plastischen Materials (8) umgeklappt wird und auf dem sich auf dem ersten Förderer (1) befindenden hinteren Teil des plastischen Materials (8) zu liegen kommt, sowie das Vorwärtsbewegen des gefalteten plastischen Materials (15) unter dem zweiten Förderer (10) hinweg zum vorderen Ende des ersten Förderers (1).

## Revendications

1. Appareil pour plier une feuille de matière (8) à l'état plastique, qui comporte des premier et second transporteurs successifs (1, 10) destinés à transporter la feuille de matière à l'état plastique, le premier transporteur (1) étant destiné à se déplacer en continu, et caractérisé en ce que le second transporteur (10) est conçu pour tourner autour d'un axe transversal depuis une position dans une disposition longitudinale bout à bout avec l'extrémité d'aval du premier transporteur jusqu'à une position sensiblement retournée au-dessus et séparée du premier transporteur pour amener la partie avant de la matière (8) à l'état plastique sur le second transporteur (10) à être pliée sur la partie arrière de la matière (8) à l'état plastique sur le premier transporteur (1) et permettre à la matière à l'état plastique, pliée (15) de se déplacer vers l'extrémité d'aval du premier transporteur au-dessous du second transporteur.

2. Appareil selon la revendication 1, dans lequel le premier transporteur (1) est un transporteur de retrait comportant une bande sans fin (2) conçue pour se déplacer en continu.

3. Appareil selon la revendication 2, dans lequel la bande sans fin (2) est entraînée autour d'une planche navette (3) capable d'effectuer un mouvement alternatif.

4. Appareil selon la revendication 1, dans lequel le second transporteur (10) est un transporteur à palettes comportant une bande sans fin (20) conçue pour se déplacer uniquement lorsque le second transporteur est dans une disposition longitudinale bout à bout avec l'extrémité d'aval du premier transporteur qui, à ce moment, est dans une position rétractée.

5. Appareil selon la revendication 1, dans lequel le second transporteur (10) est relié de façon pivotante par son extrémité d'amont à l'extrémité d'aval du premier transporteur (1) au moyen d'une charnière à excentrique (12).

6. Appareil selon la revendication 5, dans lequel le premier transporteur (1) est pourvu d'un moyen (7, 13) qui, lors d'un mouvement du premier transporteur vers sa position avancée, met en action la charnière (12) qui, à son tour, oblige le second transporteur à tourner autour de la charnière vers la position sensiblement retournée.

7. Appareil selon la revendication 6, dans lequel le moyen est une came (13) ou un cylindre pneumatique (7).

8. Appareil selon la revendication 1, dans lequel un moyen capteur (11) est prévu dans une position au-dessus du second transporteur (10) pour détecter le bord avant de la matière (8) à l'état plastique et pour mettre en action un moyen (7, 12, 13) destiné à faire tourner le second transporteur autour d'un axe transversal afin de plier la matière à l'état plastique.

9. Appareil selon la revendication 8, dans lequel le moyen capteur (11) est positionné à l'extrémité d'amont du second transporteur.

10. Procédé pour plier une feuille de matière (8) à l'état plastique, qui consiste à faire avancer une feuille de matière à l'état plastique le long d'un premier transporteur (1) conçu pour se déplacer en continu et d'un second transporteur (10) dans une disposition longitudinale bout à bout avec l'extrémité d'aval du premier transporteur, puis à faire tourner le second transporteur (10) autour d'un axe transversal jusqu'à une position sensiblement retournée au-dessus et séparé du premier transporteur (1) afin que la partie avant de la matière (8) à l'état plastique sur le second transporteur (10) soit repliée et vienne s'étendre sur la partie arrière de la matière (8) à l'état plastique sur le premier transporteur (1), et à faire avancer la matière à l'état plastique, pliée (15) vers l'extrémité d'aval du premier transporteur (1), au-dessous du second transporteur (10).
